Europäisches Patentamt

European Patent Office

Office européen des brevets

(19)

(11) Veröffentlichungsnummer: **0 463 445 A2**

## (12) EUROPÄISCHE PATENTANMELDUNG

(21) Anmeldenummer: **91109441.5**

(22) Anmeldetag: **08.06.91**

(51) Int. Cl.5: **C23F 1/02**, C04B 41/53

(30) Priorität: **18.06.90 DE 4019380**

(43) Veröffentlichungstag der Anmeldung:
**02.01.92 Patentblatt 92/01**

(84) Benannte Vertragsstaaten:
**CH DE FR GB IT LI NL**

(71) Anmelder: **DU PONT DE NEMOURS (DEUTSCHLAND) GMBH**
**Du Pont Strasse 1**
**W-6380 Bad Homburg(DE)**

(72) Erfinder: **Dudek, Dietmar, Dr.**
**Uhlandstrasse 11**
**W-6070 Langen(DE)**
Erfinder: **Stoll, Reiner, Dr.**
**Kaiser-Karl-Strasse 2**
**W-6453 Seligenstadt(DE)**
Erfinder: **Pfeiffer, Thomas, Dr.**
**25 Glenbarry Drive**
**Wilmington, Delaware 19808(US)**
Erfinder: **Schulmeyer, Britta**
**Giessener Strasse 60**
**W-6000 Frankfurt/Main 50(DE)**

(54) **Verfahren zur Herstellung von Mikrostrukfuren mit hohem Aspekfverhältnis durch Erosionslithographie.**

(57) 2.1 Technisches Problem
Die bekannte Erosionslithographie mit abrasiven Pulvern ist auf spröde Werkstoffe und mittlere Aspektverhältnisse (um 1) beschränkt.
  2.2 Lösung
Der Bereich der bearbeitbaren Werkstoffe läßt sich beträchtlich erweitern und das erreichbare Aspektverhältnis wird wesentlich erhöht, wenn statt der Teilchen des abrasiven Pulvers Tröpfchen einer Flüssigkeit, die den Werkstoff physikalisch oder chemisch auflöst, angewandt werden.
  2.3 Anwendungsgebiet
Mikrostrukturen jeder Art, insbesondere keramische Formkörper, Isolatoren sowie metallische und ferromagnetische Bauteile in Miniaturschaltungen.

EP 0 463 445 A2

Die Erfindung betrifft ein Verfahren zur Herstellung von Mikrostrukturen mit einem Aspektverhältnis größer als 1, bei dem die von einer auf der Oberfläche des Werkstücks vorhandenen Maske nicht geschützten Bereiche durch Teilchen, welche mittels eines Gasstrahls auf das Werkstück geschleudert werden, abgetragen werden (Erosionslithographie).

Für die Erzeugung von Mikrostrukturen, wie sie beispielsweise in der Halbleitertechnik und in der Mikromechanik benötigt werden, bedient man sich meist photolithographischer Verfahren. Dabei erfordert es hohen Aufwand, wenn Objekte hergestellt werden sollen, die eine gewisse Ausdehnung in Richtung der abbildenden Strahlung haben und deren Schnittfläche mit einer zu dieser Strahlung senkrechten Ebene möglichst wenig von der Position dieser Ebene abhängt, d. h. wenn in einem flächigen Werkstück Öffnungen erzeugt werden sollen, deren Seitenwände möglichst parallel und senkrecht zu den Hauptbegrenzungsflächen verlaufen sollen. Eine eingehende Diskussion dieser Zielsetzung und die Beschreibung eines geeigneten Verfahrens findet man bei E. W. Becker et al., "Das LIGA-Verfahren", Physikalische Blätter, Band 44, Seiten 166 bis 170 (1988).

Nach diesem Verfahren erzeugt man die gewünschten Strukturen, indem man ein strahlungsempfindliches Material musterförmig einer durchdringenden Strahlung aussetzt und danach mit einem geeigneten Lösungsmittel entwickelt. Durch Abformung kann man in einem zweiten Schritt auch strukturierte Werkstücke aus nicht strahlungsempfindlichen Materialien herstellen.

Das LIGA-Verfahren liefert zwar Strukturen mit einer Feinheit in der Größenordnung 1 $\mu$m und Aspektverhältnisse bis 1:100. Es erfordert jedoch grundsätzlich, da ein hohes Durchdringungsvermögen gefordert wird, eine hochenergetische Strahlung hoher Intensität, beispielsweise eine Synchrotronstrahlung. Damit ist ein hoher apparativer Aufwand verbunden. Es lassen sich auch nur Materialien mit einem geringen Schwächungsvermögen für die hochenergetische Strahlung direkt strukturieren. Die aus diesem Grund und auch bei der Serienfertigung wegen der Kosten im allgemeinen meist erforderliche Abformung kompliziert das Verfahren weiter.

Aus der US 42 37 209 ist ein Verfahren bekannt, bei dem eine Maske aus einem Photoresist auf der Oberfläche eines Isolators (Bornitrid) erzeugt wird und dieser Isolator dann in den von der Maske nicht geschützten Bereichen durch ein mittels eines Gasstroms auf die Oberfläche geschleuderten abrasiven Pulvers, beispielweise Aluminiumoxid, abgetragen wird. Mit diesem Verfahren werden Werte bis 1,5 für das Aspektverhältnis erzielt.

Mit letzterem bekannten Verfahren lassen sich zwar Strukturen mit Öffnungen von etwa 25 $\mu$m Feinheit erzeugen. Es ist jedoch auf die Bearbeitung spröder Materialien beschränkt. Man erkennt dies beispielsweise aus der genannten Patentschrift daran, daß eine Metallschicht aus Molybdän nicht so bearbeitet werden kann, sondern chemisch geätzt werden muß.

Die internationale Anmeldung WO 88/08360 beschreibt ein Verfahren zur Herstellung einer Keramikfolie mit Vertiefungen und dgl., wobei die Strukturierung im Zustand als grüne Folie mit Hilfe der Photolithographie erfolgt. Das Verfahren ist dadurch gekennzeichnet, daß auf der Oberfläche einer grünen Folie mittels eines Photolacks eine Maske erzeugt wird und mit einem Flüssigkeitsstrahl durch die Öffnungen der Maske Vertiefungen in der grünen Folie erzeugt werden. Dabei wird für den Flüssigkeitsstrahl ein Mittel verwendet, welches ein selektives Lösungsvermögen für das Bindemittel der grünen Folie besitzt. Unter einer grünen Folie wird hier ein folienartiger flexibler Körper verstanden, der ein sinterfähiges keramisches Pulver und ein organisches Bindemittel enthält. Beim Brennen der Folie verflüchtigt sich dieses Bindemittel durch Verdampfen oder Verbrennen und aus dem keramischen Anteil entsteht durch Sintern ein formbeständiger Keramikkörper.

Nach diesem Verfahren können jedoch Strukturen mit einem Aspektverhältnis größer als etwa 1 nicht hergestellt werden, da die sich bildenden Vertiefungen sehr bald mit Flüssigkeit gefüllt werden, welche den Zutritt weiterer Flüssigkeit zum Boden der Vertiefung behindert und darüber hinaus die Seitenwände angreift, wodurch feine Muster zerstört werden.

Aufgabe der Erfindung ist es, ein Verfahren zur Herstellung von Mikrostrukturen mit einem Aspektverhältnis größer als 1 anzugeben, welches gegenüber dem Stand der Technik einfach auszuführen ist und sich leicht an verschiedenste Werkstoffe anpassen läßt.

Diese Aufgabe wird gelöst durch ein Verfahren, bei dem ein Werkstück, auf dessen Oberfläche sich eine Resistmaske befindet, mit einem Gasstrahl, welcher Teilchen enthält, die das Material des Werkstücks abzutragen vermögen, behandelt wird und das dadurch gekennzeichnet ist, daß die Teilchen Flüssigkeitströpfchen sind.

Bei der Durchführung des erfindungsgemäßen Verfahrens kommt es entscheidend darauf an, daß tatsächlich voneinander getrennte Flüssigkeitsteilchen im Gasstrom vorliegen. Hierin unterscheidet sich das Verfahren grundsätzlich von den Verfahren des Standes der Technik und auch von anderen bekannten Verfahren, beispielsweise zum Entwickeln von Aufzeichnungsmaterialien mit lichthärtbaren Zusammensetzungen oder zum Ätzen von Metalloberflächen, die ein Resistmuster tragen.

Diese Bedingung wird bei einer bevorzugten Ausführungsform erfüllt, bei der das Volumen des gasförmigen Anteils im teilchenhaltigen Gasstrahl wenigstens hundertmal größer als das Volumen des Flüssigkeitsanteils ist. Besonders bevorzugt wird ein Bereich für das Verhältnis Gas zu Flüssigkeit von 1000:1 bis 500 000:1.

Die Flüssigkeitsteilchen müssen mit hoher Geschwindigkeit auf die Oberfläche des Werkstücks auftreffen. Man arbeitet bevorzugt mit Geschwindigkeiten über 100 m/s.

Die Größe der Flüssigkeitsteilchen muß bis zu einem gewissen Grade nach der gewünschten Feinheit der zu bildenden Mikrostruktur bemessen werden. Drückt man diese Größe als Durchmesser von Kugeln gleichen Volumens aus, dann ist im allgemeinen ein Wert kleiner als 100 $\mu$m zu fordern. Bevorzugt werden Teilchen von 10 bis 100 $\mu$m verwendet.

Der die Flüssigkeitsteilchen enthaltende Gasstrahl muß so geformt (kollimiert) sein, daß die Flüssigkeitsteilchen sich im wesentlichen parallel zueinander bewegen. Ein bevorzugter Arbeitsbereich ist durch einen Öffnungswinkel des Strahls kleiner als 2 Grad gekennzeichnet.

Die erwähnten Kriterien für den flüssigkeitshaltigen Gasstrahl lassen sich unter Verwendung handelsüblicher Zweistoff-Spritzdüsen, beispielsweise der in den Anwendungsbeispielen genannten Typen, erfüllen, wenn man die Gas- und Flüssigkeitsströme sowie den Gasdruck vor der Düse geeignet auswählt. Diese Düsen haben üblicherweise Öffnungen mit Durchmessern in der Größenordnung 1 mm. Entsprechend liegt auch der Querschnitt des Strahls in dieser Größenordnung. Für die Bearbeitung größerer Werkstücke ist es dann notwendig, die Oberfläche des Werkstücks in einer bevorzugt gleichförmigen Bewegung mit dem Strahl abzufahren, wie dies in ähnlicher Weise in der US 42 37 209 beschrieben ist.

Es wurde überraschenderweise gefunden, daß sich das erfindungsgemäße Verfahren in einfacher Weise an die verschiedensten zu bearbeitenden Materialien anpassen läßt. So lassen sich sowohl homogene Materialien, wie Metalle oder organische Schichten als auch mikroheterogene Materialien, beispielsweise heterogene Metallegierungen oder Formkörper aus keramischen Pulvern, die durch ein organisches Bindemittel verfestigt sind, bearbeiten.

Die Resistmaske ist eine auf der Oberfläche des Werkstücks in Form eines Musters vorhandene Schicht aus einem Material, welches durch die Flüssigkeit nicht oder nur in geringem Maß angegriffen wird. Sie kann durch eine lose wiederverwendbare Maske, beispielsweise eine gelochte, auf die zu bearbeitende Oberfläche aufgelegte Folie realisiert werden. Bevorzugt wird eine auf der Oberfläche des Werkstücks haftende Maske, da deren Muster auch freistehende Bereiche, z.B. das Innere eines Kreisrings, enthalten kann. Eine solche Maske kann beispielsweise durch einen Druckprozeß aufgetragen werden.

Besonders bevorzugt wird jedoch, wo möglich, die Erzeugung der Maske aus einem Photoresist, da so feinere Strukturen erzielt werden können. Bekannte Photoresiste basieren auf Dichromatgelatine, Novolak-Chinondiazid-Gemischen oder lichtempfindlichen Gemischen mit ethylenisch ungesättigten Komponenten.

In einer speziellen Ausführungsform des erfindungsgemäßen Verfahrens wird die Resistmaske nicht in einer besonderen Schicht auf der Oberfläche des Werkstücks, sondern im Oberflächenbereich des Werkstücks selbst erzeugt. Dies kann beispielsweise erfolgen, indem auf die Oberfläche eines chemische härtbaren Materials ein Muster aus einem Härtungsmittel, etwa mittels eines Druckverfahrens, aufgetragen wird. Ebenso ist es möglich, ein strahlenempfindliches Material im Oberflächenbereich musterförmig zu verändern, indem man ausgewählte Bereiche mit einer das Werkstück nicht durchdringenden Strahlung, die bevorzugt nur eine geringe Eindringtiefe hat, verändert.

Bei der Anwendung des erfindungsgemäßen Verfahrens in der zuletzt geschilderten Ausführungsform auf photopolymerisierbare Schichten wurde festgestellt, daß mit geringerer Belichtung eine höhere Auflösung und eine bessere Kantenschärfe erzielt werden konnte. Beispielsweise wird ein photopolymerisierbarer, negativ arbeitender, mit wäßriger Natriumcarbonatlösung entwickelbarer Trockenresistfilm mit einem Schaltungsmuster so knapp belichtet, daß nur eine Oberflächenschicht im Entwicklungsmedium unlöslich wird. Nach dem erfindungsgemäßen Verfahren behandelt ergibt er eine Maske mit scharfen Rändern ohne daß Ablösung oder Unterwaschung auftritt.

Das die Flüssigkeitströpfchen tragende Gas kann nach den besonderen Bedingungen bei der Durchführung des Verfahrens ausgewählt werden. Im allgemeinen kann Luft verwendet werden; bei empfindlichen Materialien aber auch ein Inertgas wie Argon oder Stickstoff.

Im Gegensatz zu dem Verfahren der US 42 37 209 wird das Material des zu bearbeitenden Werkstücks überwiegend durch physikalische oder chemische Lösung abgetragen. Daher verwendet man bevorzugt solche Flüssigkeiten, welche das homogene Material bzw. bei mikroheterogenen Materialien wenigstens die kontinuierlichen Phasen aufzulösen vermögen. Bevorzugt werden hierbei leicht flüchtige Lösungsmittel wie niedrigsiedende organische Lösungsmittel oder wäßrige Lösungen flüchtiger Säure oder Basen. Das leicht flüchtiges Lösungsmittel hat einen Siedepunkt bei Normaldruck von weniger als etwa 80 °C, wenn das Verfahren bei Zimmertemperatur durchgeführt wird. Wenn bei der Bearbeitung von mikroheterogenen Materialien das Lösungsmittel nur die kontinuierliche Phase löst, ist die erreichbare Struktureinheit durch die Korngröße der diskontinuierlichen Phasen begrenzt.

So lassen sich beispielsweise Metalle wie Eisen oder Zink mit wäßriger Salzsäure oder Kupfer mit einer ammoniakalischen Lösung von Ammoniumchlorid behandeln. Auch die Erzeugung von Mikrostrukturen in Glas mit Flußsäure ist nach dem erfindungsgemäßen Verfahren möglich.

Ein hohes Aspektverhältnis läßt sich erreichen, wenn das Material des Werkstücks überwiegend nur am Boden der erzeugten Vertiefungen abgetragen wird, während die Seitenwände nur sehr geringfügig angegriffen werden. Durch das erfindungsgemäße Verfahren wird erreicht, daß das frische unverbrauchte Lösungsmittel direkt auf den Boden einwirkt, wodurch an dieser Stelle ein rascher Antrag erfolgt. Die gebildete Lösung strömt danach als Film an den Seitenwänden nach außen. Durch Verdampfen des leicht flüchtigen Lösungsmittels wird die Lösung dabei aufkonzentriert und kann nur noch wenig Material von den Seitenwänden ablösen. Es muß jedoch vermieden werden, daß die Lösung an den Wänden völlig eintrocknet. Daher muß in der Regel das Lösevermögen und die Flüchtigkeit des Lösungsmittels auf das angestrebte Aspektverhältnis abgestimmt werden. Dies geschieht in bevorzugter Weise so, daß man dem leicht flüchtigen Lösungsmittel ein schwerer flüchtiges beimischt, d.h. eines, dessen Siedepunkt über etwa 100 °C liegt. Beispielsweise können Acrylatpolymere in Form von Acrylglas oder auch grüne Folien, die solche Polymere als Bindemittel enthalten, mit 1,1,1-Trichlorethan als flüchtiges Lösungsmittel behandelt werden, dem als schwerer flüchtiges Lösungsmittel eine geeignete, durch Vorversuche zu ermittelnde Menge Toluol beigemischt wird.

Bei der Bearbeitung von mikroheterogenen Materialien ist es vorteilhaft, dem Lösungsmittel noch eine Flüssigkeit beizumischen, die nicht lösend, aber dispergierend auf die ungelösten Teilchen der diskontinuierlichen Phase wirkt. Dadurch wird verhindert, daß diese Teilchen agglomerieren und die Öffnungen der erzeugten Struktur verstopfen. Besonders geeignet sind hierzu Flüssigkeiten, welche die Teilchen gut benetzen und deren Flüchtigkeit geringer als die des Lösungsmittels ist. Im Fall grüner Folien kann dem Lösungsmittel beispielsweise n-Oktan oder eine entsprechende Petroleumfraktion beigemischt werden, um die keramischen Teilchen zu dispergieren.

Das erfindungsgemäße Verfahren zeichnet sich aus durch seine äußerst vielseitige Anwendbarkeit und einfache Ausführbarkeit. Es läßt sich mit den verschiedensten Werkstoffen durchführen, da dem Fachmann eine große Auswahl an geeigneten Lösungsmitteln und Resistmaterialien zur Verfügung steht. Es erfordert auch keine aufwendigen Anlagen zur Erzeugung durchdringender Strahlung. Da es verhältnismäßig rasch arbeitet und leicht automatisiert werden kann, eignet es sich für die Anwendung in der Serienfertigung.

Die Erfindung läßt sich für die Erzeugung von Mikrostrukturen in verschiedenen Gebieten der Technik anwenden, beispielsweise bei der Herstellung von keramischen Formkörpern für Isolatoren und für metallische und ferromagnetische Bauteile in Miniaturschaltungen.

Beispiel 1

(Strukturierung einer photopolymerisierbaren Beschichtung)

Auf eine Kupferplatte wird ein 40 μm dicker, wäßrig verarbeitbarer Photopolymer-Trockenresistfilm (Riston® CAD 317 der Fa. Du Pont) auflaminiert und durch eine Photovorlage mit 30 μm breiten hellen und dunklen Streifen belichtet. Zur Entwicklung des Reliefs wurde eine wäßrige Natriumcarbonatlösung (5 g/l) mittels einer Zweistoff-Handspritzpistole vom Typ SATA L1B (Düsenweite 1,0 mm) mit Luft aufgesprüht. Der Luftdruck vor dem Gerät betrug 5 bar und der Flüssigkeitsgehalt des Gasstrahls war sehr gering. Die Pistole wurde in einem Abstand von 3,5 cm senkrecht zur zu strukturierenden Oberfläche hin und her geführt bis die unbelichteten Bereiche des Trockenresists entfernt waren. Zur Prüfung der Struktur wurde auf die freigelegten Bereiche der Kupferplatte bis zur Oberkante des Trockenresistfilms Kupfer aufgalvanisiert. Danach wurde die Resistschicht durch Eintauchen in Natronlauge (30 g/l) entfernt. Man erhielt eine saubere Kammstruktur mit 30 μm breiten Stegen und Zwischenräumen sowie senkrechten Seitenwänden. Das Aspektverhältnis war 1,3.

Beispiel 2

(Herstellung eines piezoelektrischen keramischen Formkörpers)

Ein keramischer Schlicker wurde aus 95 Gewichtsteilen eines pulverförmigen piezoelektrischen keramischen Materials, 3,5 Gewichtsteilen eines Ethylmethacrylat-Polymers (Elvacite® 2043 der Fa. Du Pont), 1,5 Gewichtsteilen Dioctylphthalat und der erforderlichen Menge 1,1,1-Trichlorethan hergestellt und zu einer nach dem Trocknen etwa 90 μm dicken Folie verarbeitet. Durch Aufeinanderlegen mehrerer dieser Folien und Pressen unter Erwärmung wurde ein Block von etwa 1,1 mm Dicke erzeugt, auf dessen Oberfläche ein 40 μm starker Photopolymer-Trockenresistfilm (Riston® CAD 317 der Fa. Du Pont) auflaminiert wurde. Dieser Film wurde durch eine Photovorlage mit einem Muster aus 120 μm breiten konzentrischen Ringen im Abstand von je 230 μm belichtet. Das Werkstück wurde dann mittels einer Düse des Typs SATA LP 90/LM 0,5 einem Luftstrahl von 400 l/min ausgesetzt, der 1,5 ml/min eines Lösungsmittelgemisches aus 1,1,1-Trichlorethan, Toluol und n-Oktan im Volumenverhältnis 45:25:30 in Form feiner Tröpfchen enthielt. Die Düse wurde im Abstand von 2,5 cm mäanderförmig über die Oberfläche des Werkstücks geführt. Im Werkstück wurden konzentrische Gräben von 120 μm Breite und 700 μm Tiefe erzeugt.

Beispiel 3

(Herstellung einer strukturierten dielektrischen Schicht)

Auf einer Trägerplatte aus Aluminiumoxid wurde eine nach dem Trocknen gleichmäßig 60 μm dicke Schicht aus einer handelsüblichen Dickfilmpaste zur Herstellung dielektrischer Schichten (Du Pont 5704) erzeugt. Auf diese Schicht wurde der im Beispiel 1 verwendete Trockenresistfilm auflaminiert und durch eine Maske belichtet, die Punkte von 250 bis 25 μm Durchmesser aufwies. Die Strukturierung erfolgte mit einem Luftstrahl aus einer mit 5 bar beaufschlagten Düse vom Typ SATA L1B mit 1,0 mm Öffnung, der einen geringen Anteil 1,1,1-Trichlorethan mitführte. Die dadurch in der dielektrischen Schicht erzeugten Löcher hatten bis hinab zu einem Durchmesser von 35 μm saubere Ränder und reichten bis zum Träger.

**Patentansprüche**

1. Verfahren zur Erzeugung von Mikrostrukturen mit einem Aspektverhältnis größer als 1 durch Behandeln eines Werkstücks, auf dessen Oberfläche sich eine Resistmaske befindet, mit einem Gasstrahl, welcher Teilchen enthält, die das Material des Werkstücks abzutragen vermögen,
dadurch gekennzeichnet, daß
die Teilchen Flüssigkeitströpfchen sind.

2. Verfahren nach Anspruch 1,
dadurch gekennzeichnet, daß
die Flüssigkeitströpfchen eine solche Größe haben, daß der Durchmesser von Kugeln gleichen Volumens zwischen 10 und 100 μm liegt.

3. Verfahren nach einem der Ansprüche 1 oder 2,

dadurch gekennzeichnet, daß
die Flüssigkeitströpfchen eine Geschwindigkeit von mindestens 100 m/s haben.

4. Verfahren nach einem der Ansprüche 1 bis 3,
dadurch gekennzeichnet, daß
der Volumenanteil der Flüssigkeit in dem Gasstrahl zwischen 1:1000 und 1:500 000 liegt.

5. Verfahren nach einem der Ansprüche 1 bis 4,
dadurch gekennzeichnet, daß
der die Flüssigkeitströpfen enthaltende Gasstrahl so kollimiert ist, daß sein Öffnungswinkel höchstens 2° beträgt

6. Verfahren nach einem der Ansprüche 1 bis 5,
dadurch gekennzeichnet, daß
die Resistmaske aus einem Photoresist gebildet wird.

7. Verfahren nach einem der Ansprüche 1 bis 5,
dadurch gekennzeichnet, daß
die Resistmaske aus dem Material des Werkstücks durch eine musterförmige Behandlung der Oberfläche gebildet wird.

8. Verfahren nach Anspruch 7,
dadurch gekennzeichnet, daß
das Werkstück aus einem strahlungsempfindlichen Material besteht und die Resistmaske durch musterförmige Bestrahlung seiner Oberfläche mit einer das Werkstück nicht durchdringenden Strahlung gebildet wird.

9. Verfahren nach Anspruch 7,
dadurch gekennzeichnet, daß
das Werkstück aus einem chemisch härtbaren Material besteht und die Resistmaske durch musterförmiges Behandeln seiner Oberfläche mit einem Härtungsmittel gebildet wird.

10. Verfahren nach einem der Ansprüche 1 bis 9,
dadurch gekennzeichnet, daß
das Material des Werkstücks homogen ist.

11. Verfahren nach einem der Ansprüche 1 bis 9,
dadurch gekennzeichnet, daß
das Material des Werkstücks mikroheterogen ist.

12. Verfahren nach Anspruch 11 oder 12,
dadurch gekennzeichnet, daß
die Flüssigkeitströpfchen ein Lösungsmittel oder ein Ätzmittel für zumindest eine Phase des Werkstückmaterials enthalten.

13. Verfahren nach Anspruch 12,
dadurch gekennzeichnet, daß

die Flüssigkeitströpfchen ein leicht flüchtiges Lösungsmittel für zumindest eine Phase des Werkstückmaterials enthalten.

14. Verfahren nach einem der Ansprüche 11 bis 13,
dadurch gekennzeichnet, daß
die Flüssigkeitströpfchen ein schwerer flüchtiges Lösungsmittel und/oder ein Dispersionsmittel für in den Lösungsmitteln unlösliche feindisperse Anteile des Werkstückmaterials enthalten.

15. Verfahren nach einem der Ansprüche 11 bis 14,
dadurch gekennzeichnet, daß
das Werkstück aus einem durch organische Bindemittel verfestigten keramischen Pulver in Form einer "grünen Folie" besteht und die Flüssigkeitströpfen mindestens ein Lösemittel für diese Bindemittel enthalten.

16. Verfahren nach einem der Ansprüche 1 bis 10,
dadurch gekennzeichnet, daß
das Werkstück aus Metall besteht und die Flüssigkeitströpfchen ein Ätzmittel für dieses Metall enthalten.